# EUROPÄISCHE PATENTANMELDUNG

(11) **EP 0 832 857 A1**
(43) Veröffentlichungstag der Anmeldung: **01.04.1998**
(21) Anmeldenummer: 97250290.0
(22) Anmeldetag: 25.09.1997
(51) Int. Cl.: C02F 11/12

(54) **Verfahren zur kontinuierlichen Trocknung von Klärschlamm**

(30) Priorität: 25.09.1996 DE 19641201
(71) Anmelder: MANNESMANN Aktiengesellschaft, 40213 Düsseldorf (DE)
(72) Erfinder: Baldauf, Cornelia, Dipl.-Ing., 04229 Leipzig (DE); Bauer, Uwe, Dipl.-Ing. Dr., 04448 Wiederitzsch (DE); Haustein, Matthias, Dipl.-Ing., 04157 Leipzig (DE)
(74) Vertreter: Meissner, Peter E., Dipl.-Ing.

(57) **Zusammenfassung**

Die Erfindung betrifft ein Verfahren zur kontinuierlichen Trocknung von Klärschlamm in einem Trommeltrockner (1), dem vorentwässerter Schlamm zugeführt und aus dem getrockneter Schlamm mit einem Trockensubstanzgehalt von mindestens 90 % als Granulat abgeführt wird, wobei die zur Trocknung benötigte Wärmeenergie dem Trommeltrockner durch ein heißes Gas (Heizgas) (8) zugeführt und das im Trommeltrockner abgekühlte Heizgas sowie die bei der Trocknung freigesetzten Gase und Dämpfe aus dem Trommeltrockner abgeführt werden (9). Dabei erfolgt bei der Behandlung von quecksilberhaltigem Klärschlamm die Trocknung bis auf höchsten 98 % Trockensubstanz und die Verweildauer des Klärschlamms sowie die Temperatur und die Zuführmenge des Heizgases werden so aufeinander abgestimmt, daß die Temperatur im Granulat auf mindestens 78 °C eingestellt wird und 85 °C nicht übersteigt.

## Beschreibung

Die Erfindung betrifft ein Verfahren zur kontinuierlichen Trocknung von Klärschlamm in einem Trommeltrockner gemäß dem Gattungsbegriff des Patentanspruchs 1.

Der bei der Reinigung von Abwässern anfallende feinteilige Klärschlamm weist üblicherweise nach seiner Entwässerung einen Trockensubstanzgehalt in einer Größenordnung von etwa 10 bis 40 % auf. Zur Entsorgung des Klärschlamms bedient man sich unterschiedlicher Lösungen. So kann der Klarschlamm beispielsweise als Düngemittel in der Landwirtschaft genutzt werden. Voraussetzung hierfür ist jedoch eine weitestgehende Schadstofffreiheit des Klärschlamms. Andere Lösungen sehen die Verbrennung des Klärschlamms oder einfach die Deponierung vor. In diesen Fällen ist der hohe Wasseranteil des Klärschlamms hinderlich. Daher wird üblicherweise eine Klärschlammtrocknung vorgenommen. Um den Klärschlamm für eine anschließende Lagerung zu stabilisieren, muß er bis auf einen Trockensubstanzgehalt von mindestens 90 % getrocknet werden. Dies kann beispielsweise in einem Drehrohraggregat erfolgen, das auch als Trommeltrockner bezeichnet wird und beispielsweise in Trocknungsverfahren angewendet wird, wie sie in der DE 39 28 325 A1 oder der EP 0 343 431 A1 beschrieben werden. In beiden Schriften ist jeweils die anschließende Verbrennung des getrockneten Schlamms vorgesehen. In der DE 39 28 325 A1 wird hinsichtlich der Trocknungsbedingungen gefordert, daß die Trocknungstemperatur eine Obergrenze von 200 °C nicht überschreiten darf, da sonst eine Selbstentzündung des erzeugten Granulats eintreten kann. Die Trocknung erfolgt im Trommeltrockner in der Weise, daß der Klärschlamm auf der einen Stirnseite des Trommeltrockners aufgegeben und unter ständiger Umwälzung langsam durch den Trommeltrockner bis zum Austragsende wandert. Zur Verdampfung des Wasseranteils wird dem Trommeltrockner ständig ein durch eine Brennkammer (gegebenenfalls unter Einschaltung eines indirekten Wärmetauschers) erzeugtes heißes Gas (im folgenden als Heizgas bezeichnet) zugeführt, das in direkten Wärmeaustausch mit dem Klärschlamm tritt. Das abgekühlte Heizgas wird zusammen mit dem verdampften Wasser aus dem Klärschlamm und gegebenenfalls dabei freigesetzten sonstigen Gasen aus dem Trommeltrockner abgeführt. Beim Verlassen des Trommeltrockners weist die Trockensubstanz eine granulierte Form auf.

In Fällen, in denen Klärschlamm anfällt, der in erheblichem Maße mit Quecksilber verunreinigt ist, wirft die bisherige Klärschlammtrocknung in einem Trommeltrockner erhebliche Probleme auf, die ihre Durchführbarkeit verhindern oder zumindest stark behindern. Der Quecksilberanteil im Klärschlamm wird nämlich zu einem erheblichen Teil mit den aus dem Trommeltrockner abgezogenen Gasen und Dämpfen ausgetragen, so daß das Abgas wegen seiner hohen Schadstoffbelastung nicht ohne weiteres in die Umgebung abgegeben werden darf. Die Maßnahmen zur geeigneten Reinigung der Abgase sind jedoch sehr aufwendig, so daß die Wirtschaftlichkeit des gesamten Verfahrens in solchen Fällen erheblich beeinträchtigt wird.

Aus der DE 40 13 761 A1 ist ein Trocknungsverfahren für pastöse und/oder brockige Materialien bekannt, bei dem als Trocknungsaggregat ein Bandtrockner eingesetzt wird. Zur Trocknung von schwermetallhaltigem Klärschlamm wird darin eine Temperaturobergrenze von 75 °C vorgesehen, um das Entweichen von Schadstoffen aus der aufgegebenen Hanfwerkschicht des Klärschlamms möglichst weitgehend zu vermeiden. Bei einer zu haltenden Temperatur von max. 75 °C im Trockengut ist es sehr schwierig, einen Endgehalt an Trockensubstanz von über 90 % zu erreichen. Dieser Trockensubstanzgehalt muß aber bei Klärschlamm eingehalten werden, um eine Gefahrenbildung bei der Lagerung zu vermeiden. Die Beheizung des Bandofens erfolgt üblicherweise durch direkte Kontaktierung des Trocknungsgutes mit den heißen Abgasen, die in einer Brennkammer erzeugt werden. Erfahrungen zeigen, daß ein solches Verfahren schwierig zu führen ist, wenn die Einhaltung vorgegebener Grenzwerte der Schadstoffemission zu gewährleisten ist. Aus Sicherheitsgründen muß vielfach die Trocknungstemperatur deutlich abgesenkt werden. Das aber wirkt sich sehr stark auf den Gradienten der Trocknung und somit auf die erforderliche Größe des Trockungsaggregats aus. Hinzu kommt die Tatsache, daß ein Bandtrockner bei der Trocknung von Klärschlamm regelmäßig ein staubförmiges Trocknungsprodukt liefert, dessen weitere Verwendung durch die vorliegende Feinteiligkeit erschwert wird.

Aufgabe der vorliegenden Erfindung ist es, ein gattungsgemäßes Verfahren so zu gestalten, daß mit möglichst wenig Aufwand auch eine Trocknung von stark quecksilberhaltigen Klärschlämmen mit hoher Effektivität möglich ist.

Gelöst wird diese Aufgabe bei einem gattungsgemäßen Verfahren mit den kennzeichnenden Merkmalen des Patentanspruchs 1. Vorteilhafte Weiterbildungen in der Erfindung ergeben sich aus den Unteransprüchen 2 bis 10.

Der Grundgedanke der vorliegenden Erfindung besteht darin, die bisherige Trocknung von Klärschlamm in Trommeltrocknern so abzuwandeln, daß der im Klärschlamm enthaltene Quecksilberanteil praktisch vollständig in der Trockensubstanz verbleibt, also nicht in die Trocknungsluft (Heizgas) des Trommeltrockners übergeht. Zumindest soll dieser Anteil auf extrem geringe Werte beschränkt bleiben. Überraschenderweise ist dies möglich, wenn die Verweildauer des Klärschlamms im Trommeltrockner sowie die Temperatur und die Zuführmenge des Heizgases so aufeinander abgestimmt werden, daß in dem erzeugten Granulat eine Höchsttemperatur von 85 °C nicht überstiegen, aber eine Temperatur von mindestens 78 °C eingestellt wird. Um dies möglichst gut gewährleisten zu können, sollte der Trockensubstanzgehalt des erzeugten Granulats eine Obergrenze von 98 % möglichst nicht übersteigen. Je näher man nämlich an die Marke von 100 % Trockensubstanz kommt, um so eher steigt die Maximaltemperatur im Granulat auf unerwünscht hohe Werte, die zu unzulässig hohen Quecksilberbelastungen im abgeführten abgekühlten Heizgas führen.

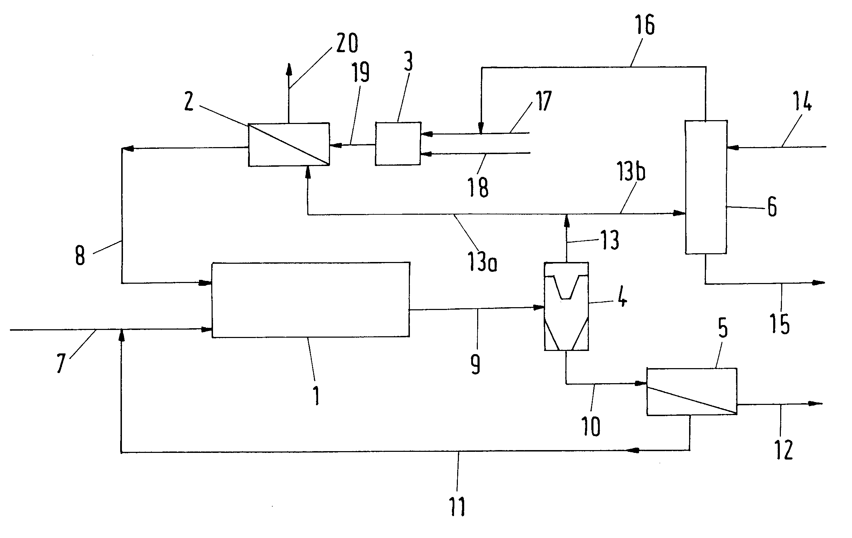

Anhand des in der einzigen Figur dargestellten schematischen Verfahrensablaufs wird die Erfindung nachfolgend näher erläutert.

Über eine Schlammzuleitung 7 wird einem Trommeltrockner 1 an seiner linken Stirnseite vorentwässerter Klärschlamm zugeführt. Der Trommeltrockner 1 ist mit seiner Längsachse leicht geneigt zu seinem Austragsende, das sich auf der rechten Stirnseite befindet. Durch ständiges Drehen des Trommeltrockners wandert auf diese Weise der Klärschlamm unter fortlaufender Trocknung langsam über die gesamte Baulänge des Trommeltrockners und agglomeriert dabei in einem erheblichen Umfang zu einem Granulat mit unterschiedlicher Korngröße. Die zur Trocknung benötigte Wärmeenergie wird dem Trommeltrockner 1 über eine Heizgaszuleitung 8 in Form von erwärmter Trocknungsluft zugeführt. Das Granulat wird vorzugsweise auf einen Trockensubstanzgehalt von etwa 92 bis 94 % gebracht. Dieser Trockensubstanzgehalt ist einerseits völlig ausreichend für eine gute biologische Stabilisierung und erleichtert auf der anderen Seite die Vermeidung einer unbeabsichtigten Überhitzung des Granulats. Die Temperatur des Granulats, die 85 °C nicht übersteigen darf, sollte nach Möglichkeit in einem Bereich von etwa 78 bis 82 °C, vorzugsweise bei 80 °C eingestellt werden. Unter diesen Bedingungen bleibt der ursprüngliche Quecksilberanteil nahezu vollständig im Granulat gebunden. Im dargestellten Verfahrensschema ist vorgesehen, daß die Beheizung des Trommeltrockners 1 durch direkten Kontakt des Heizgases mit dem Klärschlamm erfolgt. Daher kann das abgekühlte Heizgas zusammen mit den bei der Trocknung freigesetzten Gasen und dem Wasserdampf durch eine Ableitung 9 von der rechten Stirnseite des Trommeltrockners 1 abgezogen und in einen Gas/Feststoff - Abscheider 4 gegeben werden. Das trockene Granulat wird aus dem Gas/Feststoff - Abscheider 4 unten durch eine Granulatableitung 10 abgeführt. Das abgeschiedene Gas (einschließlich des Dampfanteils) verläßt den Gas/Feststoff-Abscheider 4 über eine Gasableitung 13. Diese führt über eine anschließende Heizgasrückleitung 13a in einen Wärmeaustauscher 2, in dem das abgekühlte Heizgas wieder erwärmt wird, um erneut über die Heizgaszuleitung 8 in den Trommeltrockner 1 geführt zu werden. Auf diese Weise wird ein weitgehend geschlossener Kreislauf für die als Heizgas vorzugsweise eingesetzte Trocknungsluft erreicht. Um den bei der Trocknung im Trommeltrockner 1 entstehenden Dampfanteil aus dem Kreislauf der Heizluft ausschleusen zu können, ist an die Gasableitung 13 außer der Heizgasrückleitung 13a noch eine Gas/Dampf-Ableitung 13b angeschlossen, die in einen Kondensator 6 führt. Der Kondensator 6 ist vorzugsweise als Sprühkondensator ausgebildet, dem über eine Wasserzuleitung 14 das für die Kondensation benötigte Sprühwasse zugeführt werden kann. Das gebildete Kondensat wird unten aus dem Sprühkondensator 6 über eine Kondensatableitung 15 abgezogen. Der verbleibende Gasanteil, der im wesentlichen aus Luft besteht, wird über eine Gasableitung 16 oben aus dem Sprühkondensator 6 abgezogen und vorzugsweise in eine Verbrennungsluftzuleitung 17 gegeben, die ihrerseits eine Brennkammer 3 mit Verbrennungsluft versorgt. Die Brennstoffzuleitung der Brennkammer 3 ist mit 18 bezeichnet. Das in der Brennkammer 3 erzeugte heiße Rauchgas wird über eine Rauchgaszuleitung 19 dem Wärmeaustauscher 2 zugeführt und gibt seine Wärme an das aufzuwärmende Heizgas für den Trocknungskreislauf ab. Das abgekühlte Rauchgas verläßt den Wärmeaustauscher 2 über eine Rauchgasableitung 20 und kann in die Umgebung abgegeben werden. Durch die Verwendung des im Sprühkondensator 6 abgeschiedenen Gasanteils als Verbrennungsluft wird eine mögliche Geruchsbelästigung sicher vermieden. Die Anlage zur Durchführung des erfindungsgemäßen Verfahrens ist zweckmäßigerweise so ausgelegt, daß auch von den Transportstrecken des Klärschlamms und des trockenen Granulats alle Gase, die zu einer Geruchsbelästigung der Umgebung führen könnten, abgesaugt und dem Heizgas des Trocknungskreislaufs zugefügt werden (nicht dargestellt). Auf diese Weise wird der unvermeidbare Verlust an Heizgas im Zusammenhang mit der Ausschleusung des Wasserdampfs über die Gas/Dampf - Ableitung 13b ausgeglichen.

Die aus dem Gas/Feststoff-Abscheider 4 herausführende Granulatableitung 10 endet vorzugsweise in einer Siebeinrichtung 5, in der ein Feinanteil des Granulats (vorzugsweise unter 3 mm Korngröße) abgeschieden wird, so daß nur ein Granulat mit einer gewünschten größeren Korngröße über die Granulatfördereinrichtung 12 als Endprodukt aus der Siebeinrichtung 5 abgeführt wird. Zweckmäßigerweise wird in der Siebeinrichtung 5 nicht nur ein Feinanteil abgeschieden, sondern darüber hinaus auch das unerwünschte Überkorn, das beispielsweise eine Korngröße über 8 mm aufweist. Dieses Überkorn kann über eine einfache Mahleinrichtung (zum Beispiel eine Hammermühle) zerkleinert und zusammen mit dem abgeschiedenen Feinanteil durch eine Granulatrückführung 11 dem über die Schlammzuleitung 7 frisch zuzuführenden Klärschlamm zugemischt werden. Auf diese Weise läßt sich die Korngröße des gewünschten Granulats beeinflussen. Je mehr relativ grobkörniges Material zurückgeführt wird, um so größer wird das den Trommeltrockner 1 verlassende Granulatkorn. Die Menge des zurückzuführenden Granulats liegt zweckmäßigerweise in einer Größenordnung von 30 bis 50 % des erzeugten Granulats.

In Versuchen konnte gezeigt werden, daß durch die erfindungsgemäße Verfahrensweise bis zu 99 % des ursprünglich im Klärschlamm enthaltenen Quecksilberanteils im getrockneten Granulat verbleiben, so daß die abgeführte Trocknungsluft hinsichtlich Quecksilber nahezu unbelastet bleibt. Dies ist überraschenderweise bei hoher Trocknungsleistung mit außerordentlich einfachen Mitteln möglich, indem die Temperatur im Granulat in den erfindungsgemäß vorgeschriebenen Grenzen gehalten wird. Durch Absieben des Granulats und Rückführung des Feinanteils wird ein annähernd staubfreies granuliertes Trocknungsprodukt erhalten, dessen weitere Verwendung unproblematisch ist.

## Patentansprüche

1. Verfahren zur kontinuierlichen Trocknung von Klärschlamm in einem Trommeltrockner, dem vorentwässerter Schlamm zugeführt und aus dem getrockneter Schlamm mit einem Trockensubstanzgehalt von mindestens 90 % als Granulat abgeführt wird, wobei die zur Trocknung benötigte Wärmeenergie dem Trommeltrockner durch ein heißes Gas (Heizgas) zugeführt und das im Trommeltrockner abgekühlte Heizgas sowie die bei der Trocknung freigesetzten Gase und Dämpfe aus dem Trommeltrockner abgeführt werden,
dadurch gekennzeichnet,
daß bei der Behandlung von quecksilberhaltigem Klärschlamm die Trocknung bis auf höchsten 98 % Trockensubstanz erfolgt und daß die Verweildauer des Klärschlamms sowie die Temperatur und die Zuführmenge des Heizgases so aufeinander abgestimmt werden, daß die Temperatur im Granulat auf mindestens 78 °C eingestellt wird und 85 °C nicht übersteigt.

2. Verfahren nach Anspruch 1,
dadurch gekennzeichnet,
daß die Temperatur im Granulat auf höchstens 82 °C eingestellt wird.

3. Verfahren nach einem der Ansprüche 1 bis 2,
dadurch gekennzeichnet,
daß das Granulat im Trommeltrockner durch das Heizgas direkt beheizt wird und das abgekühlte Heizgas mit den freigesetzten Gasen und Dämpfen durch einen Gas/Feststoffabscheider geführt wird.

4. Verfahren nach Anspruch 3,
dadurch gekennzeichnet
daß das Heizgas nach der Feststoffabscheidung in einem indirekten Wärmeaustauscher wiedererwärmt und im Sinne einer Kreislaufführung erneut dem Trommeltrockner zugeführt wird, wobei lediglich eine der bei der Trocknung freigesetzten Gas/Dampf-Menge entsprechende Gas/Dampf-Menge aus dem Kreislauf ausgeschleust wird.

5. Verfahren nach Anspruch 4,
dadurch gekennzeichnet,
daß die ausgeschleuste Gas/Dampf-Menge in einem Kondensator vom Dampfanteil befreit und der verbleibende Gasanteil der Verbrennungsluft einer Brennkammer zugeführt wird, die der Beheizung des Wärmeaustauschers zur Wiedererwärmung des Heizgases dient.

6. Verfahren nach einem der Ansprüche 1 bis 5,
dadurch gekennzeichnet,
daß eine Teilmenge des abgeführten trockenen Granulats zurückgeführt und mit dem frisch dem Trommeltrockner zuzuführenden Schlamm vermischt wird.

7. Verfahren nach Anspruch 6,
dadurch gekennzeichnet,
daß die zurückgeführte Teilmenge des Granulats etwa 30 bis 50 % des den Trommeltrockner verlassenden Granulats beträgt.

8. Verfahren nach einem der Ansprüche 1 bis 7,
dadurch gekennzeichnet,
daß die Trocknung bis auf einen Trockensubstanzgehalt im Granulat von 92 bis 94 % geführt wird.

9. Verfahren nach einem der Ansprüche 1 bis 8,
dadurch gekennzeichnet,
daß das Granulat einer Siebung unterzogen wird, in der ein Feinanteil und/oder unerwünschtes Überkorn abgesondert und dem zurückzuführenden Granulatanteil zugefügt werden.

10. Verfahren nach Anspruch 9,
dadurch gekennzeichnet,
daß als Feinanteil das Granulat mit einer Korngröße unter 3 mm und als Überkorn das Granulat mit einer Korngröße über 8 mm abgetrennt werden.
